# EUROPÄISCHE PATENTANMELDUNG

(11) **EP 3 616 977 A1**
(43) Veröffentlichungstag der Anmeldung: **04.03.2020**
(21) Anmeldenummer: 18191903.6
(22) Anmeldetag: 31.08.2018
(51) Int. Cl.: B60L 53/18, B60L 53/60, B60L 53/14, B60L 53/16

(54) **LADEKABEL FÜR EIN ELEKTROFAHRZEUG**

(71) Anmelder: Siemens Aktiengesellschaft, 80333 München (DE)
(72) Erfinder: Linzmaier, Klaus-Peter, 73650 Winterbach (DE)

(57) **Zusammenfassung**

Die Erfindung betrifft ein Ladekabel (20) für ein Elektrofahrzeug (80). Ferner betrifft die Erfindung einen Ladestecker (P20) sowie ein Ladesystem (100) und die Verwendung des Ladekabels (20) zur Kommunikation beim Laden eines Elektrofahrzeugs (80). Zum erheblichen Verbessern der Signalqualität zwischen Elektrofahrzeug (80) und infrastrukturseitiger Ladesteuerung wird ein Ladekabel (20) für ein Elektrofahrzeug (80) aufweisend eine Kommunikationseinrichtung (15), die zum Bereitstellen einer Kommunikationsverbindung zwischen einem infrastrukturseitigen Kommunikationssystem (M25), insbesondere auf Ethernet-Basis, und einem fahrzeugseitigen Kommunikationssystem (M80), insbesondere auf Powerline-Basis, ausgebildet ist.

## Beschreibung

Die Erfindung betrifft ein Ladekabel für ein Elektrofahrzeug. Ferner betrifft die Erfindung einen Ladestecker sowie ein Ladesystem und die Verwendung des Ladekabels zur Kommunikation beim Laden eines Elektrofahrzeugs.

Als Energiespeicher kommt in Elektrofahrzeugen ein Speicher für elektrische Energie zum Einsatz. Dabei kann es sich um einen elektrochemischen Energiespeicher, wie beispielsweise ein Verbund aus Lithium-Ionen Akkumulatoren, handeln.

Zur Kommunikation kommen zwischen dem Fahrzeug und der Ladesteuerung bzw. der Ladeinfrastruktur verschiedene Systeme/Protokolle zum Einsatz. beispielsweise ist ein Control Pilot Signal gemäß IEC 15118 und/oder IEC 61851 bekannt, wo ein PWM Signal zum Einsatz kommt, das zur Signalisierung des Grundstatus des Elektrofahrzeugs gegenüber der Ladesteuerung eingesetzt wird. Dazu wird das Control Pilot Signal mit einem fahrzeugseitigen Widerstand belastet, was wiederum die Spannung des Control Pilot Signals bezüglich Masse und/oder Schutzleiter, im auch Englischen "protective earth" PE, beeinflusst. Das Spannungsniveau von 12V, 9V, 6V, 3V signalisiert dabei verschiedene Betriebszustände des Ladevorgangs. Damit der Grundstatus des Ladevorgangs zuverlässig vom Elektrofahrzeug signalisiert und von der Ladesteuerung erkannt werden kann muss die Flankensteilheit des PWM Signals gewisse Kriterien erfüllen. Dies gilt insbesondere hinsichtlich der Anstiegs- und Abfallzeit der Flanke; auch die Pulsbreite bzw. der Tastgrad muss der in der Norm geforderten Pulsbreite/dem Tastgrad entsprechen. Überschreitet die Anstiegs- und/oder die Abfallzeit eine gewisse Länge, so kann das PWM Signal nicht mehr zuverlässig erkannt und ausgewertet werden. Ein PWM Signal ist eine Art eines Rechtecksignals.

Für weitergehende Funktionen (sog. Smart Charging) ist nach IEC 15118 ein Powerline-Signal (u.a. auf HomePlug GreenPHY Basis) vorgesehen, über das mit einer höheren Bandbreite kommuniziert werden kann.

Bei Ladekabeln mit einer gewissen Länge kann eine hohe Signalqualität (sowohl des Rechtecksignals als auch des Powerline-Signals) nicht mehr garantiert werden.

Es ist Aufgabe der Erfindung ein Ladekabel bereitzustellen, das die Signalqualität zwischen Fahrzeug und infrastrukturseitiger Ladesteuerung erheblich verbessert. Es ist weiter Aufgabe der Erfindung einen Ladestecker sowie ein Ladesystem bereitzustellen.

Die Aufgabe wird durch ein Ladekabel gemäß Anspruch 1 gelöst. Das Ladekabel weist zur Kommunikation mit dem Elektrofahrzeug und einer Ladeinfrastruktur eine Kommunikationseinrichtung auf. Das Ladekabel dient zum Aufladen eines Elektrofahrzeugs und die Kommunikationseinrichtung dient zum Austausch von Laderelevanten Daten und/oder Steuersignalen. Zusätzlich können Abrechnungsdaten, Firmware-Updates, ... von der Infrastruktur an das Fahrzeug und vom Fahrzeug an die Infrastruktur übertragen werden. Die Kommunikationseinrichtung ist zum Bereitstellen einer Kommunikationsverbindung zwischen einem infrastrukturseitigen Kommunikationssystem, z.B. einer Ladeinfrastruktur mit einer Ladesteuerung, und einem fahrzeugseitigen Kommunikationssystem eines Elektrofahrzeugs ausgebildet. Das infrastrukturseitige Kommunikationssystem ist dabei insbesondere ein Kommunikationssystem auf Ethernet-Basis, das fahrzeugseitige Kommunikationssystem ist dabei insbesondere ein Kommunikationssystem auf Powerline-Basis. Die Kommunikationseinrichtung kann zum Bereitstellen der Kommunikationsverbindung zumindest einen Medienkonverter und/oder eine Netzwerkbrücke, im Englischen "bridge", aufweisen.

Die das infrastrukturseitige Kommunikationssystem ist Teil einer Ladeinfrastruktur, die im einfachsten Fall eine einzelne Ladesäule mit einer Energieversorgungseinrichtung zum Bereitstellen von Ladeleistung und einer Ladesteuerung zum Ansteuern der Energieversorgungseinrichtung zum be-/entladen eines Elektrofahrzeugs sein kann. Üblicherweise übernimmt die Ladesteuerung die Kommunikation mit dem Fahrzeug. Die Ladeinfrastruktur kann aber auch eine modulare Schaltschranklösung, z.B. für eine Tiefgarage mit vielen Ladeplätzen sein, in der mehrere Ladesteuerungen, z.B. für Gruppen von Ladeplätzen, zur Verfügung stehen. Auch eine übergeordnete zentrale Ladesteuerung kann über einen Netzwerkverteiler (z.B. ein Switch) im infrastrukturseitigen Kommunikationssystem mit mehreren Ladekabeln kommunizieren. Das/die Ladekabel kann/können fest mit der Ladeinfrastruktur verbunden sein oder einen verriegelbaren infrastrukturseitigen Stecker aufweisen. Das infrastrukturseitige Kommunikationssystem ist vorzugsweise verschieden vom fahrzeugseitigen Kommunikationssystem.

Das Ladekabel mit der Kommunikationseinrichtung hat den besonderen Vorteil, dass sie im Vergleich zur Ladeinfrastruktur nahe am Elektrofahrzeug angeordnet sein kann und somit die Kommunikationsqualität, insbesondere bei langen Ladekabeln erheblich steigert.

Ladesteuerungen sind vorliegend infrastrukturseitig angeordnet und sind zum Steuern eines Ladevorgangs ausgebildet, wobei der Ladevorgang das Laden und/oder Entladen eines Energiespeichers des Elektrofahrzeugs umfasst. Ladesteuerungen steuern dazu eine Leistungselektronik, z.B. einen Umrichter oder eine Energieversorgungseinheit, an, die nach erfolgter Kontaktierung und Kommunikation zwischen dem Elektrofahrzeug und der Ladesteuerung zum Laden und/oder Entladen des Energiespeichers hinzu geschaltet werden kann. Die Leistungselektronik stellt dabei die Leistung zum Aufladen des Energiespeichers bereit, die Ladesteuerung steuert den Ladevorgang und kann weitere Parameter bzgl. des Ladevorgangs überwachen. Ein Entladevorgang kann beispielsweise zum Stützen des Energieversorgungsnetzes oder zum Versorgen von Verbrauchern dienen. Die Ladesteuerung kommt hier analog zum Einsatz.

In einer weiteren Ausführungsform ist die Kommunikationseinrichtung in einem Endbereich des Ladekabels angeordnet. Der Endbereich des Ladekabels kann dabei insbesondere auch einen Ladestecker umfassen, wobei die Kommunikationseinrichtung ebenso in einem Ladestecker angeordnet sein kann. Mit Endbereich ist dabei der Teil des Ladekabels bezeichnet, der bei einem Ladevorgang an das Elektrofahrzeug, bzw. dessen Buchse geführt wird und mit dem Elektrofahrzeug verbunden wird. Der Endbereich ist somit beim Ladevorgang sehr nahe am Fahrzeug und am gegenüberliegenden Ende des mit der Infrastruktur verbundenen Teils des Ladekabels angeordnet. Der Endbereich kann z.B. als das letzte Drittel oder Viertel des Ladekabels definiert sein, insbesondere die letzten 20, 15 oder 10% des Ladekabels, die zur Anordnung am Fahrzeug ausgebildet sind. Das Ladekabel ist infrastrukturseitig oft fest mit der Infrastruktur verbunden. Mit der Anordnung der Kommunikationsvorrichtung im Endbereich soll die Strecke zwischen der Kommunikationsvorrichtung und einer im Fahrzeug angeordneten Kommunikationsvorrichtung möglichst kurzgehalten werden. Dies hat den Vorteil, dass Störungen so weiter minimiert werden.

Die Kommunikationseinrichtung kann ferner dazu ausgebildet sein, ein infrastrukturseitiges Kommunikationsprotokoll in ein fahrzeugseitiges Kommunikationsprotokoll umzuwandeln. Dazu können ein Prozessor sowie ein Zwischenspeicher für Telegramme vorgesehen sein.

In einer weiteren Ausführungsform weist die Kommunikationseinrichtung eine infrastrukturseitige Kommunikationsschnittstelle auf. Ergänzend oder alternativ weist die Kommunikationseinrichtung eine fahrzeugseitige Kommunikationsschnittstelle auf. Die Kommunikationsschnittstellen können dabei als Ethernet-Schnittstelle und/oder als Powerline-Schnittstelle ausgebildet sein. Die Kommunikationsschnittstellen können zumindest teilweise als Software in einem Controller ausgebildet sein.

In einer weiteren Ausführungsform weist die Kommunikationseinrichtung eine infrastrukturseitige Kommunikationsschnittstelle auf, die zur Spannungsversorgung der Kommunikationseinrichtung ausgebildet ist. Diese kann beispielsweise als Power-over-Ethernet-Schnittstelle oder USB- Schnittstelle ausgebildet sein. Die Kommunikationseinrichtung kann so direkt über die infrastrukturseitige Kommunikationsschnittstelle mit Spannung versorgt und es muss keine weitere Spannungsversorgung vorgesehen werden. Dies vereinfacht den Aufbau der Kommunikationseinrichtung erheblich und ermöglicht weitere Freiheitsgrade bei der Konstruktion der Kommunikationseinrichtung bzw. eines Ladesteckers mit einer Kommunikationseinrichtung.

In einer weiteren Ausführungsform weist die Kommunikationseinrichtung eine Signalquelle auf. Die Signalquelle ist dabei zur Erzeugung eines Kommunikationssignals für das fahrzeugseitige Kommunikationssystem ausgebildet. Von besonderem Vorteil ist es, wenn die Signalquelle als ein Powerline-Medium ausgebildet ist. Das Kommunikationssignal wird vorzugsweise mittels eines QAM und/oder eines OFDM Verfahrens, auf ein weiteres Signal/eine weitere Spannung aufmoduliert.

In einer weiteren Ausführungsform weist die Kommunikationseinrichtung einen Signalgenerator zur Erzeugung eines Rechtecksignals auf. Das Rechtecksignal kann dabei ein PWM-Signal sein, das Rechtecksignal kann dabei zur Signalisierung von Ladezuständen über ein Control-Pilot-Signal ausgebildet sein. Das Rechtecksignal sowie das Kommunikationssignal können dabei beide an der fahrzeugseitigen Kommunikationsschnittstelle bereitgestellt werden. Das Signalisieren von Ladezuständen gemäß IEC 61851 ist somit zuverlässig und mit hoher Signalqualität möglich.

In einer weiteren Ausführungsform ist die Kommunikationseinrichtung zum Erzeugen eines Rechtecksignals und zum Aufmodulieren eines Kommunikationssignals auf das Rechtecksignal ausgebildet. Das Aufmodulieren wird vorzugsweise mittels eines QAM- und/oder mittels eines OFDM-Verfahrens durchgeführt.

Vorzugsweise weist die Kommunikationseinrichtung eine kombinierte Signalquelle und Signalgenerator auf. Bei der kombinierten Quelle handelt es sich also um einen PWM-Generator, auf dessen Ausgang ein Kommunikationssignal aufmoduliert wird. Derartige Lösungen lassen sich als hochintegriertes System on a Chip realisieren.

In einer weiteren vorteilhaften Ausführungsform weist die Kommunikationseinrichtung eine Koppelvorrichtung auf. Die Koppelvorrichtung ist dabei zum Einbringen eines Kommunikationssignals auf einen Leiter, insbesondere einen CP-Leiter, ausgebildet. Der CP-Leiter ist dabei der so genannte Control-Pilot-Leiter und ist beispielsweise aus der IEC61851 bekannt. Die Koppelvorrichtung kann dabei zur galvanischen Entkopplung ausgebildet sein. Das Kommunikationssignal kann so z.B. galvanisch entkoppelt auf den CP-Leiter eingekoppelt werden können. Insbesondere ist eine kapazitive Kopplung des Kommunikationssignals vorteilhaft.

Besonders vorteilhaft ist es, wenn die Kommunikationseinrichtung selbst eine galvanische Trennung zwischen den Übertragungsmedien aufweist. Im Falle einer Ethernet-Schnittstelle und einer Powerline-Schnittstelle ist die Galvanische Trennung vorteilhaft auf Ethernet-Seite vorzusehen. Dies erhöht die elektrische Sicherheit, die Störsicherheit und die Kommunikationsqualität der Kommunikationseinrichtung weiter.

In einer weiteren Ausführungsform weist das Ladekabel eine Datenleitung auf, die zur Verbindung der Kommunikationseinrichtung mit einer infrastrukturseitigen Kommunikationseinrichtung, z.B. einer Kommunikationsschnittstelle einer Ladesteuerung dient. Die Datenleitung kann dabei beispielsweise als Ethernet-Leitung ausgebildet sein. Es kann sich dabei auch um eine in dem Ladekabel angeordnete geschirmte Kommunikationsstrecke handeln, beispielsweise zwei jeweils verdrillte Aderpaare mit gemeinsamer Schirmung (auch unter dem englischen Fachbegriff "twisted pair" bzw. "shielded twisted pair" - STP - bekannt). Besonders vorteilhaft ist es, wenn die Datenleitung zum Bereitstellen einer Versorgungsspannung für die Kommunikationseinrichtung ausgebildet ist.

Eine Ladeleitung weist dabei einen Proximity Pilot (PP-Leiter), einen Control Pilot (CP Leiter), zumindest zwei Außenleiter (L1, L2, L3, L+. L-) einen Schutzkontakt/Erdleiter (PE) und ggf. einen Neutralleiter (N) auf. Zusätzlich weist die Ladeleitung eine twisted pair bzw. eine shielded twisted pair Leitung auf, die zur Kontaktierung der Kommunikationseinrichtung und der Ladeinfrastruktur dient.

In einer weiteren vorteilhaften Ausführungsform weist die Kommunikationseinrichtung zumindest eine Kontakteinrichtung auf. Die Kontakteinrichtung ist dabei zum Durchschleifen von einem oder mehreren der folgenden Leiter ausgebildet: Außenleiter, Neutralleiter, PP-Leiter und/oder CP-Leiter. Je nach Anbringungsort der Kommunikationseinrichtung können einer oder mehrere der Leiter durchgeschleift werden. Wird beispielsweise die Kommunikationseinrichtung im Ladekabel vorgesehen, so ist es möglich, die leistungsführenden Außenleiter, den Neutralleiter und weitere Leiter durchzuschleifen. Dies hat den besonderen Vorteil, dass günstige Kabel von der Ladestation zur Kommunikationseinrichtung verwendet werden können. Die Kommunikationseinrichtung kann außerdem so gestaltet werden, dass eine Abschirmung der leistungsführenden Außenleiter von den funktionellen Teilen der Kommunikationseinrichtung ermöglicht wird.

Es können aktive Repeater im Ladekabel vorgesehen werden um mehrfach die maximale Länge des infrastrukturseitigen Kommunikationssystems ausnutzen zu können. Längen von bis zu 50m bei 24V POE bzw. 100m mit 48V POE sind ohne aktive Repeater problemlos realisierbar. Es hat sich weiterhin als vorteilhaft herausgestellt, wenn das Ladekabel selbst bzw. die Kommunikationseinrichtung keine Ladesteuerung beinhaltet, da die Ladesteuerung so vorteilhaft infrastrukturseitig angeordnet werden kann und das Ladekabel lediglich Kommunikationsfunktionen aufweist. Dies erhöht die Flexibilität des Ladekabels weiter, da bis auf die infrastrukturseitige Kommunikationsschnittstelle keine weiteren Beschränkungen hinsichtlich der zentralen Ladesteuerung bestehen.

Die Aufgabe wird weiter durch einen Ladestecker für ein Elektrofahrzeug aufweisend eine Kommunikationsvorrichtung gelöst. Die Kommunikationseinrichtung ist im Ladestecker angeordnet und ist zum Bereitstellen einer Kommunikationsverbindung zwischen einem infrastrukturseitigen Kommunikationssystem, insbesondere auf Ethernet-Basis, und einem fahrzeugseitigen Kommunikationssystem eines Elektrofahrzeugs, insbesondere auf Powerline-Basis, ausgebildet.

Die eingangs beschriebenen Ausführungsformen einer im Ladekabel angeordneten Kommunikationseinrichtung sind ebenso auf die im Ladestecker angeordnete Kommunikationseinrichtung anwendbar. Diese werden daher im Folgenden nicht gesondert aufgeführt.

In einer weiteren Ausführungsform ist die Kommunikationseinrichtung derart im Ladestecker angeordnet, dass die durch eine Ladespannung und/oder einen Ladestrom hervorgerufenen Störungen auf die Kommunikationseinrichtung minimal sind. Die Störungen können im vgl. zur Anordnung der Kommunikationseinrichtung in der Ladeinfrastruktur deutlich reduziert werden. Dies hat den besonderen Vorteil, dass die Signalqualität weiter erhöht wird.

In einer weiteren Ausführungsform weist der Ladestecker ein Schirmelement auf, das zur Abschirmung der Kommunikationseinrichtung dient. Insbesondere handelt es sich dabei um ein Schirmelement das mit dem Erdleiter verbunden ist, beispielsweise ein Schirmblech. Auch eine Kommunikationseinrichtung, die sich nicht im Ladestecker befindet, sondern im Endbereich außerhalb des Steckers angeordnet ist, kann ein derartiges Schirmelement aufweisen.

In einer weiteren Ausführungsform weist die Kommunikationseinrichtung selbst ein Schirmelement auf, insbesondere ein mit einem Erdleiter verbundenes Schirmelement, das zur Abschirmung der Bauteile innerhalb der Kommunikationseinrichtung dient, die die Kommunikationseinrichtung bereitstellen.

Die Aufgabe wird weiterhin durch ein Ladesystem gelöst. Das Ladesystem weist dabei zumindest eine infrastrukturseitige Ladesteuerung und ein Ladekabel mit einer erfindungsgemäßen Kommunikationseinrichtung auf. Die infrastrukturseitige Ladesteuerung kommuniziert dabei mit dem Ladekabel bzw. mit der Kommunikationseinrichtung im Ladekabel über eine infrastrukturseitige Kommunikationsverbindung, vorzugsweise Ethernet oder USB. Das Ladesystem ist besonders vorteilhaft, da auf diese Art und Weise fast beliebig lange Ladekabel realisiert werden können.

In einer weiteren Ausführungsform weist das Ladesystem zumindest eine zentrale Ladesteuerung auf. Des Weiteren weist das Ladesystem einen Netzwerkverteiler auf, insbesondere einen Netzwerk-Switch. Das Ladesystem ist so zur Kommunikation mit mehreren Ladekabeln bzw. der jeweiligen in den Ladekabeln angeordneten Kommunikationseinrichtungen ausgebildet. Auf diese Art und Weise kann eine zentrale Ladesteuerung vorgesehen werden, die eine sehr große Anzahl an Ladepunkten oder Ladeabgängen bedienen kann. Dies ist besonders günstig, da so Steuerungen an den Ladeabgängen bzw. Ladepunkten eingespart werden können.

In einer weiteren Ausführungsform weist das Ladekabel eine Länge von zumindest 5 m, 10 m, 15 m, 20 m oder 50 m auf. Bis zu 100 m sind mit der vorliegenden Erfindung problemlos realisierbar. Längen von über 100 m könnten mit Repeatern im Ladekabel abgedeckt werden und es wären Vielfache von 100 m möglich. Dies ist insbesondere bei verwinkelten Garagen von großem Vorteil.

Die Aufgabe wird weiterhin gelöst durch die Verwendung eines erfindungsgemäßen Ladekabels zum Laden und/oder Entladen eines Elektrofahrzeugs.

Im Folgenden wird die Erfindung anhand der in den Figuren dargestellten Ausführungsbeispiele näher beschrieben und erläutert. Es zeigen:
- FIG 1: schematisch eine Ladeinfrastruktur mit einem Ladekabel und einer Kommunikationseinrichtung,
- FIG 2: eine Ladeinfrastruktur mit einer alternativen Ausführungsform eines Ladekabels,
- FIG 3: ein Ladesystem mit einer Kommunikationseinrichtung im Detail,
- FIG 4: einen schematischen Querschnitt eines Ladesteckers,
- FIG 5: eine Kommunikationseinrichtung im Detail,
- FIG 6: eine weitere Ausführungsform einer Kommunikationseinrichtung im Detail und
- FIG 7: ein Ladesystem mit mehreren Ladekabeln.

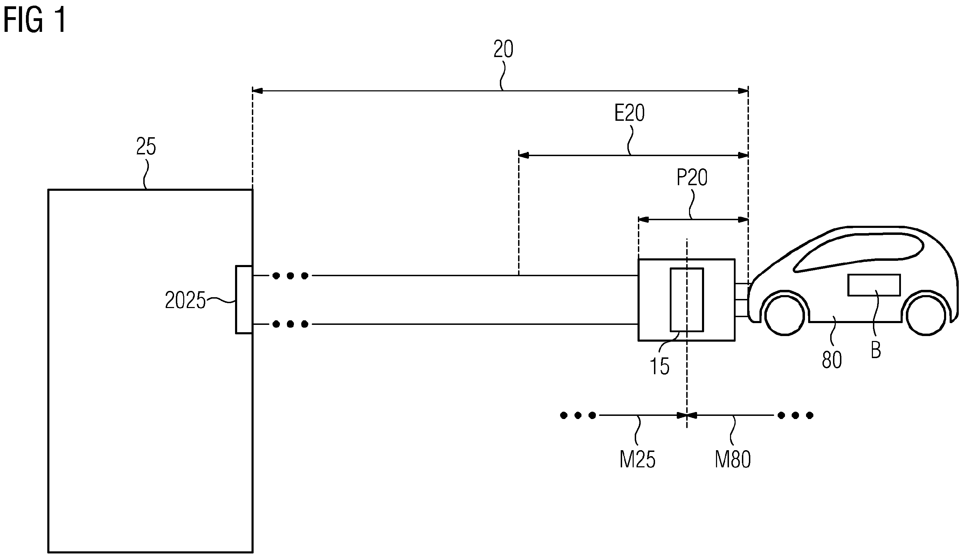

FIG 1 zeigt schematisch eine Ladeinfrastruktur 25 zum Be- und/oder Entladen eines Energiespeichers B eines Elektrofahrzeugs 80. Zum Transfer elektrischer Energie von der Ladeinfrastruktur 25 zum Elektrofahrzeug 80 bzw. dessen Energiespeichers B, ist ein Ladekabel 20 vorgesehen, das an der Ladeinfrastruktur 25 an einer Schnittstelle 2025 befestigt und elektrisch kontaktiert ist. Hier kann ebenso ein infrastrukturseitiger Stecker vorgesehen sein. Eine direkte Befestigung ohne Stecker kann das Ladekabel 20 gegen Diebstahl sichern.

Die Ladeinfrastruktur 25 ist dabei vorerst schematisch gezeigt, da das Ladekabel 20 mit verschiedenen Arten von Infrastrukturen kompatibel ist.

Das Ladekabel 20 weist einen Ladestecker P20 in einem Endbereich E20 des Ladekabels 20 auf. Der Endbereich ist dabei als der Bereich zu sehen, der die letzten 25 % des Ladekabels 20 inklusive des Ladesteckers P20 beinhaltet (nicht maßstabsgetreu). Der Endbereich E20 ist dabei immer fahrzeugseitig angeordnet. Das Ladekabel 20 kann somit nur in einer Richtung angebracht werden. Im vorliegenden Ausführungsbeispiel weist der Ladestecker P20 eine Kommunikationseinrichtung 15 auf, die zur Kommunikation mit der Ladeinfrastruktur 25 und dem Elektrofahrzeug 80 ausgebildet ist. Bei der Ladeinfrastruktur 25 kann es sich beispielsweise um eine einzelne Ladesäule oder eine zentral in einem Schaltschrank angeordnete Ladeinfrastruktur handeln, wie sie beispielsweise in Tiefgaragen für mehrere Ladeplätze vorgesehen sein kann.

Mit Ladestecker ist gleichermaßen die männliche oder weibliche Form eines Steckers oder einer Buchse gemeint. Der Ladestecker ist am fahrzeugseitigen Ende, d.h. im Endbereich des Ladekabels angebracht und vereinfacht das kontaktieren des Ladekabels mit dem Elektrofahrzeug. Ladestecker ohne Kommunikationseinrichtung sind aus dem Stand der Technik bekannt, unter anderem: Typ 1 gemäß SAE J1772-2009, Typ 2 gemäß EN 62196-2 (VDE-AR-E 2623-2-2) und/oder Typ 3 gemäß EV Plug Alliance.

Zur Kommunikation sind ein infrastrukturseitiges Kommunikationssystem M25 und ein fahrzeugseitiges Kommunikationssystem M80 vorgesehen. Das fahrzeugseitige Kommunikationssystem ist oft durch entsprechende Normen vorgegeben. So ist z.B. gemäß IEC 15118 ein Kommunikationssystem auf Powerline-Basis vorgesehen.

Auf Infrastrukturseite kann gemäß dem letztendlichen Anwendungsszenario ein infrastrukturseitiges Kommunikationssystem M25 gewählt werden. Insbesondere infrastrukturseitige Kommunikationssysteme M25 auf Ethernet-Basis können hier von Vorteil sein, da diese weit verbreitet sind und eine hohe Verfügbarkeit und Flexibilität aufweisen. Auch industrielle Bussysteme können auf als infrastrukturseitige Kommunikationssysteme M25 von Vorteil sein, da hier auch Sicherheitsmechanismen (im Sinne von "Safety") wie ProfiSAFE zum Einsatz kommen können. Selbstverständlich ist es möglich eine sichere Kommunikation (im Sinne von Security) durch Verschlüsslung und/oder Hashwertbildung der Nachrichten oder vergleichbare Mechanismen zu realisieren.

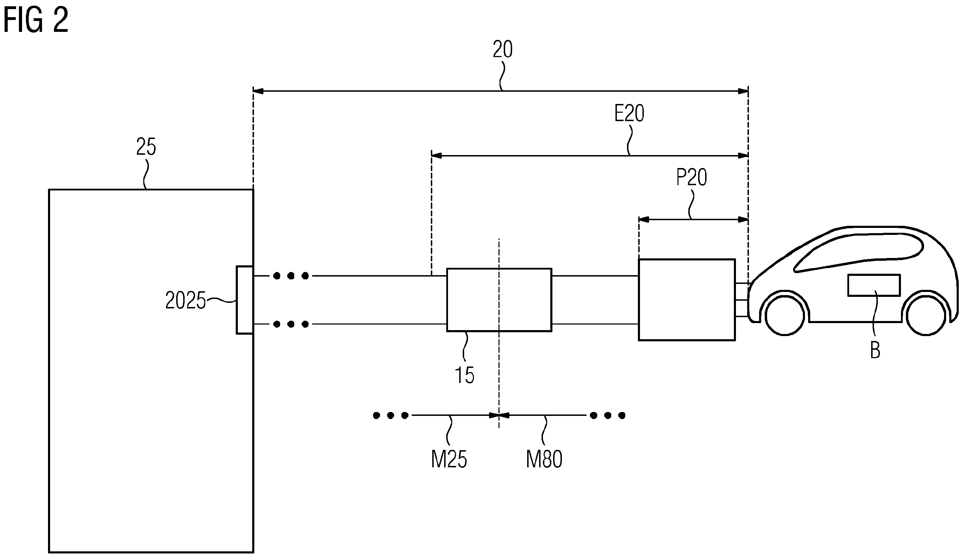

FIG 2 zeigt unter Anwendung der Bezugszeichen aus FIG 1 ein Ladekabel 20, in dessen Endbereich E20 eine Kommunikationseinrichtung 15 außerhalb des Ladesteckers P20 angeordnet ist. Diese alternative Ausführungsform hat den Vorteil, dass bestehende Stecker nicht verändert werden müssen. Wenn die Kommunikationseinrichtung 15 vor dem Stecker, insbesondere näher als 1m, 0,5m, 0,3m am Stecker, angeordnet wird, erreicht die Verbesserung der Kommunikationsqualität ein ähnliches Niveau wie bei einer im Stecker angeordneten Kommunikationseinrichtung 15.

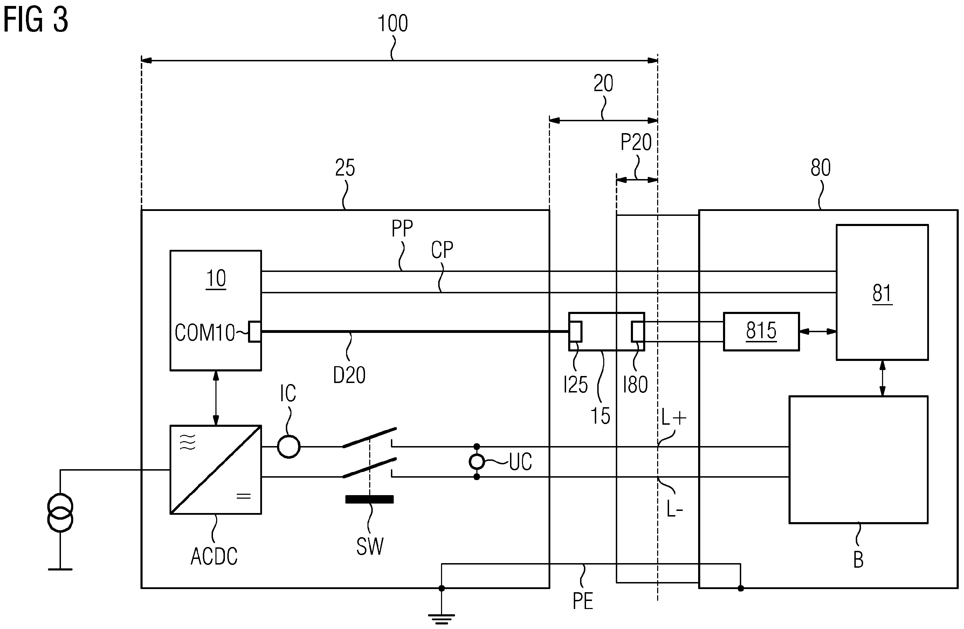

FIG 3 zeigt ein Ladesystem 100, mit einer Ladeinfrastruktur 25, einem Ladekabel 20 und einem Ladestecker P20 im Detail. Die Ladeinfrastruktur 25 weist eine infrastrukturseitige Ladesteuerung 10 auf. Zur Spannungsversorgung steht ein Gleichrichter ACDC zur Verfügung, dessen Ausgangsspannung mit einem Schalter SW zugeschaltet werden kann. Wenn der Schalter SW geschlossen ist, stellt der Gleichrichter ACDC einen Ladestrom IC und eine Ladespannung UC für die Batterie B bereit. Im vorliegenden Fall handelt es sich um einen Ladevorgang mittels Gleichspannung, die über die Außenleiter L+, L- zum Elektrofahrzeug 80 bzw. dessen Batterie B übertragen wird.

Zum Aufbau einer Kommunikationsverbindung zwischen der Infrastruktur und dem Elektrofahrzeug 80 weist die Ladesteuerung 10 eine Kommunikationseinrichtung COM10 auf. Die Kommunikationseinrichtung COM10 ist über eine Datenleitung D20, die beispielsweise Teil des Ladekabels 20 sein kann, mit einer Kommunikationseinrichtung 15 verbunden. Die Kommunikationseinrichtung 15 ist dabei zumindest teilweise im Stecker P20 angeordnet. Die Kommunikationseinrichtung 15 weist eine infrastrukturseitige Kommunikationsschnittstelle I25 und eine fahrzeugseitige Kommunikationsschnittstelle I80 auf. In einer besonders vorteilhaften Ausführungsform ist die Datenleitung D20 als Ethernet-Leitung im Ladekabel 20 ausgebildet, wobei die infrastrukturseitige Kommunikationseinrichtung COM10 in der Ladesteuerung 10 eine Ethernet-Schnittstelle mit Power-over-Ethernet (POE) Versorgung sein kann. Die Datenleitung D20 könnte ebenso als USB Leitung ausgebildet sein, womit die Spannungsversorgung der Kommunikationseinrichtung 15 ebenfalls auf einfache Weise sichergestellt wäre.

Die Kommunikationseinrichtung 15 weist weiterhin eine fahrzeugseitige Kommunikationsschnittstelle I80 auf, die zur Kommunikation mit einer fahrzeugseitigen (Lade-)Steuerung 81 über eine Kommunikationseinrichtung 815 ausgebildet ist. Diese Kommunikation kann z.B. gemäß IEC ISO 15118-3: Physical and data link layer requirements über den Erdleiter PE und den CP-Leiter CP (im englischen als Control Pilot bezeichnet) mittels einer Powerline Kommunikation, z.B. Homeplug GreenPHY übertragen werden. Die vorliegende Lösung hat den Vorteil, dass die Kabellänge des Ladekabels 20 in den Hintergrund tritt und eine einwandfreie Kommunikation unabhängig von der Ladeleistung garantiert werden kann. Besonders vorteilhaft kann die Kommunikationseinrichtung 15 als sogenannte Ein-Chip Lösung (auch System on a Chip SOC), die in den Ladestecker integriert wird, ausgeführt sein.

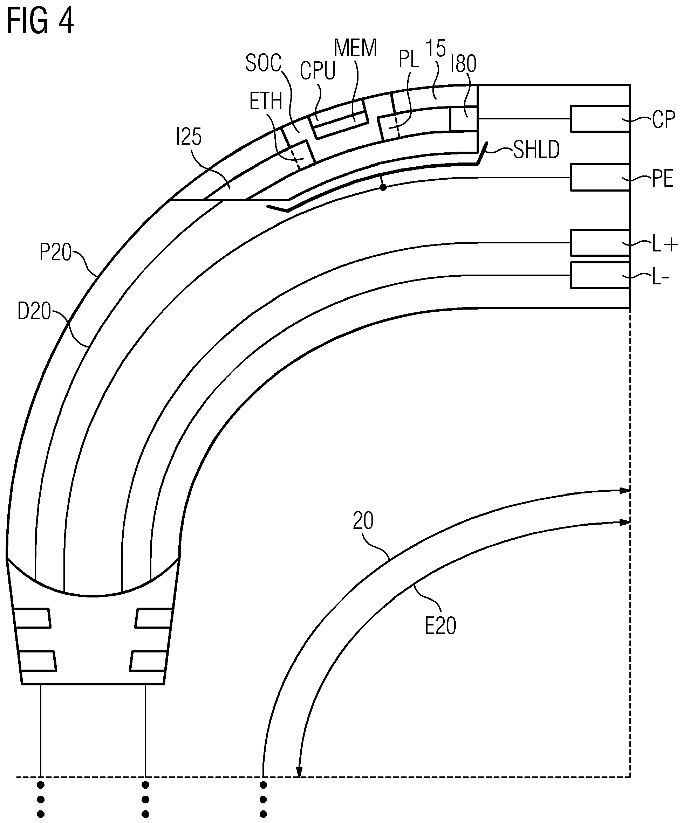

FIG 4 zeigt einen schematischen Querschnitt eines Ladesteckers P20. Der Ladestecker weist zur Kontaktierung des Elektrofahrzeugs 80 einen CP-Kontakt CP, einen PE-Kontakt PE sowie einen Außenleiter L+, L- auf. Der vorliegende Ladestecker P20 könnte ebenso für ein Dreiphasensystem mit den Außenleitern L1, L2, L3 zum Einsatz kommen. Ebenso eingezeichnet ist, dass das Ladekabel 20 an dessen Ende sich der Ladestecker P20 befindet und das einen Endbereich E20 aufweist, in dem der Ladestecker P20 angeordnet. Der Ladestecker P20 weist des Weiteren eine Kommunikationseinrichtung 15 auf, die mittels eines über den PE-Kontakt PE geerdeten Schirmelements SHLD von den Außenleitern L+, L- bzw. L1, L2, L3 abgeschirmt ist. Nicht gezeigt ist ein PP-Kontakt PP (auch proximity pilot genannt) der ebenso direkt im Stecker angeordnet werden kann und über das Ladekabel 20 oder direkt im Stecker bereitgestellt werden kann.

Die Kommunikationseinrichtung 15 weist einen Chip SOC auf, der Kommunikationsverbindung des infrastrukturseitigen Kommunikationssystems M25 (nicht eingezeichnet), das in diesem Fall über das Ladekabel 20 mittels einer Datenleitung D20 als Ethernet-Signal kontaktiert wird, bereitstellt. Dementsprechend weist der Chip SOC eine Ethernet-Schnittstelle ETH auf. Die Ethernet-Schnittstelle ETH könnte dabei eine POE-Schnittstelle sein, die mittels Power over Ethernet die Spannungsversorgung des Chips SOC und ggf. weiterer Funktionen des Ladesteckers sicherstellt. Der Chip SOC weist weiterhin einen Prozessor CPU sowie einen Speicher MEM auf. Der Prozessor CPU kann dabei die zur Konvertierung der Pakete/Telegramme der Kommunikationssysteme M25, M80 notwendigen Schritte durchführen. Im Speicher MEM können Telegramme zwischengespeichert werden oder anderweitige Konfigurationsdaten hinterlegt werden. Der Chip SOC weist weiterhin eine Powerline-Schnittstelle PL auf, die zum Beispiel als HomePlug GreenPHY Schnittstelle ausgebildet sein kann. Die Kommunikationseinrichtung selbst weist eine fahrzeugseitige Schnittstelle I80 und eine infrastrukturseitige Schnittstelle I25 auf, die als tatsächliche physikalische Schnittstellen ausgebildet sein können und die Datenleitung die 20 bzw. den Kontakt zur CP Kontakt CP aufweisen können. Die Schnittstellen I25, I80 verbinden dabei die Kommunikationseinrichtung 15 mit der Datenleitung D20 und dem CP Kontakt CP. Die Schnittstellen I25, I80 stellen außerdem jeweils die Verbindung zum Chip SOC her.

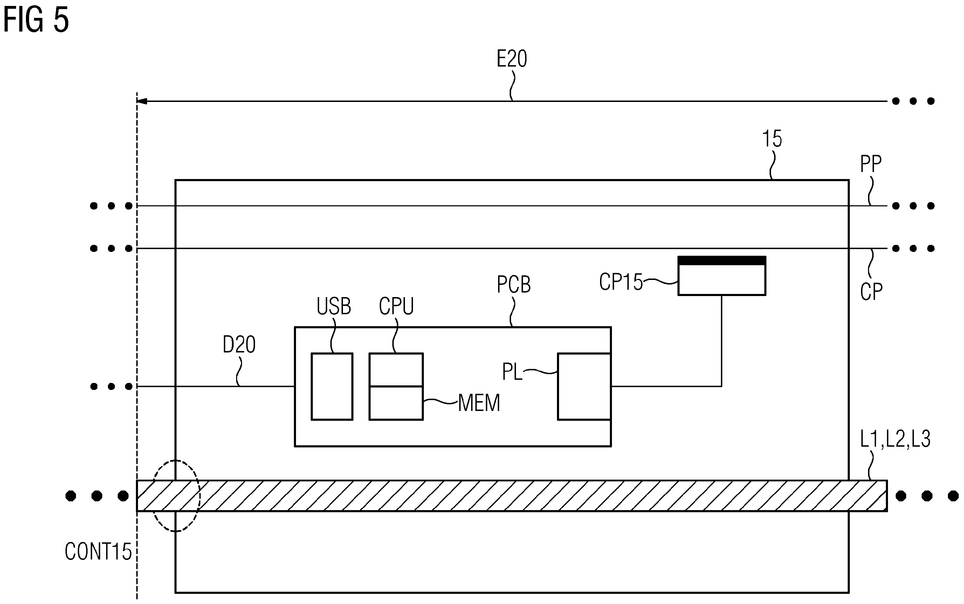

FIG 5 zeigt eine Kommunikationseinrichtung 15, die im Endbereich E20 eines Ladekabels 20 außerhalb oder innerhalb eines Ladesteckers P20 angeordnet ist. Eine Kontakteinrichtung CONT15 ist angedeutet am Übergang der Außenleiter L1, L2, L3 zur Kommunikationseinrichtung 15 und dient zum Durchschleifen der Außenleiter L1, L2, L3 durch die Kommunikationseinrichtung 15. Analog könnte auch für die PP Leitung und die CP Leitung ein entsprechende Kontakteinrichtung CONT15 vorgesehen sein.

In dieser Ausführungsform ist der aktive Teil der Kommunikationseinrichtung 15 eine Schaltung PCB, die zum Beispiel als "Printed Circuit Board" oder als "molded interconnected device" (MID) ausgestaltet sein kann. Auf der Schaltung PCB befindet sich ein USB Controller USB, ein Powerline Modem PL sowie ein Prozessor CPU sowie ein Speicher MEM. Die USB Schnittstelle USB kann dabei zur Spannungsversorgung der Schaltung PCB über die Datenleitung die 20 ausgebildet sein.

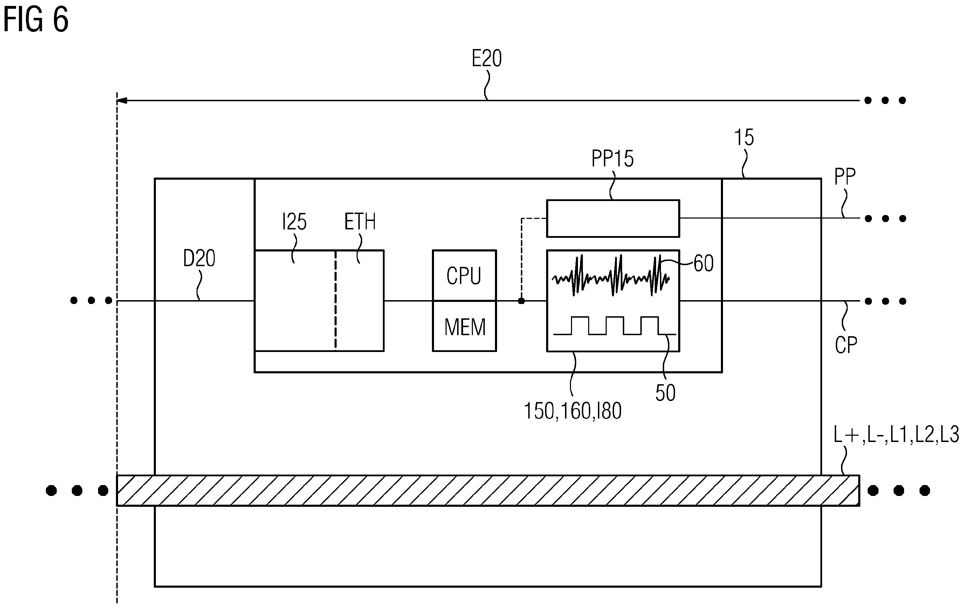

FIG 6 zeigt eine Kommunikationseinrichtung 15, die eine infrastrukturseitige Schnittstelle I25 aufweist, die in diesem Fall als Ethernet-Schnittstelle ETH ausgebildet ist. Analog zu den FIG 4 und FIG 5 weist die Kommunikationseinrichtung 15 einen Prozessor CPU und einen Speicher MEM auf. Die fahrzeugseitige Schnittstelle I80 ist in diesem Fall nicht nur als Powerline-Schnittstelle PL ausgebildet, sondern weist weitere Funktionen auf. Ein Rechtecksignal 50, das als PWM Signal ausgebildet sein kann, wird von einem Signalgenerator 150 erzeugt. Der Signalgenerator 150 kann Teil des Prozessors CPU sein, der beispielsweise als Mikrocontroller ausgebildet sein kann. Eine Signalquelle 160 erzeugt ein Kommunikationssignal 60, in diesem Fall ein Powerline-Signal und moduliert dieses auf das Rechtecksignal 50 auf. Eine digitale und/oder gemeinsame Erzeugung des Rechtecksignals 50 in Verbindung mit einem überlagerten Kommunikationssignal 60 ist ebenso denkbar.

Ein PP-Kontakt PP kann ebenso mit einem Erkennungswiderstand PP15 versehen werden um eine PP-Funktionalität direkt in der Kommunikationseinrichtung 15 zu realisieren. In der Regel wird über den PP-Kontakt PP der maximal mögliche Ladestrom des Fahrzeugs bzw. des Ladekabels signalisiert.

Nicht gezeigt aber sowohl innerhalb als auch außerhalb der Kommunikationseinrichtung anordenbar ist der Erdleiter PE. Dieser ist in den Ausführungsformen der FIG 5 und 6 gleichermaßen vorzusehen. Der Erkennungswiderstand PP ist dabei in der Regel bzgl. Erdleiter PE angeordnet.

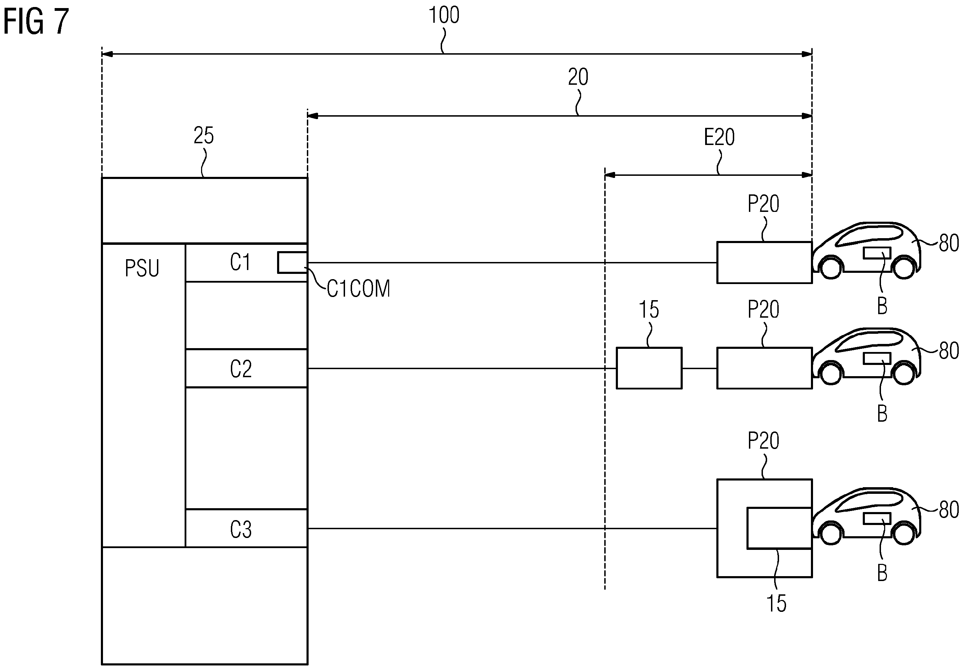

FIG 7 zeigt ein System 100 mit mehreren Elektrofahrzeugen 80, die jeweils einen Energiespeicher B aufweisen und von einer zentralen Ladeinfrastruktur 25 aufgeladen werden. Zum Bereitstellen der für die Ladevorgänge notwendigen Leistung ist eine Energieversorgungseinrichtung PSU vorgesehen, die über drei Ladesteuerungen C1, C2, C3 jeweils eines der Elektrofahrzeug 80 mit der notwendigen Leistung für einen Ladevorgang versorgt. Die Ladesteuerung C1 ist dabei eine herkömmliche Ladesteuerung, die eine Kommunikationseinheit C1COM aufweist und einen Ladestecker P20, der über ein Ladekabel 20 mit dem Elektrofahrzeug 80 verbunden ist. Je länger das Ladekabel 20 ist, desto niedriger wird die Signalqualität die die Kommunikationseinheit C1COM zum Fahrzeug hin und vom Fahrzeug weg erreichen kann.

Gemäß eines Aspekts der vorliegenden Erfindung weist das Ladekabel 20, das mit der zweiten Ladesteuerung C2 verbunden ist, im Endbereich E20 eine Kommunikationseinrichtung 15 auf, die außerhalb des Ladestecker P20 angeordnet ist.

Gemäß eines weiteren Aspekts der vorliegenden Erfindung weist das Ladekabel 20, das mit der dritten Ladesteuerung C3 verbunden ist, im Endbereich E20 eine Kommunikationseinrichtung 15 auf, die innerhalb des Ladesteckers P20 angeordnet ist.

Das in FIG 7 gezeigte System zeigt die Interoperabilität der vorliegenden Erfindung mit bestehenden Lösungen. Eine Erweiterung eines bestehenden Schaltschranksystems mit den erfindungsgemäßen Ladekabeln 20 mit jeweils einer Kommunikationseinrichtung ermöglicht das Erweitern einer ggf. vorhandenen der zentralen Ladeinfrastruktur und das Hinzufügen von - bzgl. der zentralen Ladeinfrastruktur - weiter entfernten Ladepunkten.

Die in den FIG insbesondere in FIG 4, FIG 5 und FIG 6 gezeigten Ausführungsformen der Kommunikationseinrichtung 15 können jeweils untereinander ausgetauscht oder miteinander kombiniert werden. Im Ladestecker P20 kann z.B. alternativ zu einem SOC eine Schaltung PCB vorgesehen sein. Eine Kommunikationseinrichtung 15, die außerhalb des Steckers P20 im Endbereich E20 des Ladekabels 20 angeordnet ist, kann ebenso als eine Chiplösung mit einem Chip SOC ausgebildet sein. Selbst eine Kombination ist denkbar, Teile der Kommunikationseinrichtung 15 können außerhalb des Steckers P20 und weitere Teile innerhalb des Steckers P20, aber jeweils im Endbereich E20 angeordnet werden.

Zusammenfassend betrifft die Erfindung ein Ladekabel 20 für ein Elektrofahrzeug 80. Ferner betrifft die Erfindung einen Ladestecker P20 sowie ein Ladesystem 100 und die Verwendung des Ladekabels 20 zur Kommunikation beim Laden eines Elektrofahrzeugs 80. Zum erheblichen Verbessern der Signalqualität zwischen Elektrofahrzeug 80 und infrastrukturseitiger Ladesteuerung wird ein Ladekabel 20 für ein Elektrofahrzeug 80 aufweisend eine Kommunikationseinrichtung 15, die zum Bereitstellen einer Kommunikationsverbindung zwischen einem infrastrukturseitigen Kommunikationssystem M25, insbesondere auf Ethernet-Basis, und einem fahrzeugseitigen Kommunikationssystem M80, insbesondere auf Powerline-Basis, ausgebildet ist.

## Patentansprüche

1. Ladekabel (20) für ein Elektrofahrzeug (80) aufweisend eine Kommunikationseinrichtung (15), die zum Bereitstellen einer Kommunikationsverbindung zwischen einem infrastrukturseitigen Kommunikationssystem (M25), insbesondere auf Ethernet-Basis, und einem fahrzeugseitigen Kommunikationssystem (M80), insbesondere auf Powerline-Basis, ausgebildet ist.

2. Ladekabel (20) nach Anspruch 1, wobei die Kommunikationseinrichtung (15) in einem Endbereich (E20) des Ladekabels (20), insbesondere in einem Ladestecker (P20) angeordnet ist.

3. Ladekabel (20) nach Anspruch 1 oder 2, wobei die Kommunikationseinrichtung (15) eine infrastrukturseitige Kommunikationsschnittstelle (I25), insbesondere eine Ethernet-Schnittstelle, und/oder eine fahrzeugseitige Kommunikationsschnittstelle (I80), insbesondere eine Powerline-Schnittstelle, aufweist.

4. Ladekabel (20) nach einem der vorhergehenden Ansprüche, wobei die Kommunikationseinrichtung (15) eine infrastrukturseitige Kommunikationsschnittstelle (I25) aufweist, die zur Spannungsversorgung der Kommunikationseinrichtung (15) ausgebildet ist.

5. Ladekabel (20) nach einem der vorhergehenden Ansprüche, wobei die Kommunikationseinrichtung (15) eine Signalquelle (160) aufweist, die zur Erzeugung eines Kommunikationssignals (60) für das fahrzeugseitige Kommunikationssystem (M80) ausgebildet ist.

6. Ladekabel (20) nach einem der vorhergehenden Ansprüche, wobei die Kommunikationseinrichtung (15) einen Signalgenerator (150) zur Erzeugung eines Rechtecksignals (50) aufweist.

7. Ladekabel (20) nach einem der vorhergehenden Ansprüche, wobei die Kommunikationseinrichtung (15) zum Erzeugen eines Rechtecksignals (50) und zum Aufmodulieren eines Kommunikationssignals (60), insbesondere mittels eines QAM und/oder eines OFDM Verfahrens, auf das Rechtecksignal (50) ausgebildet ist.

8. Ladekabel (20) nach einem der vorhergehenden Ansprüche, wobei die Kommunikationseinrichtung (15) eine Koppelvorrichtung (CP15) aufweist, die zum Einkoppeln eines Kommunikationssignals (60) auf einen CP-Leiter (CP) ausgebildet ist.

9. Ladekabel (20) nach einem der vorhergehenden Ansprüche, aufweisend eine Datenleitung (D20), die zur Verbindung der Kommunikationseinrichtung (15) mit einer infrastrukturseitigen Kommunikationseinrichtung (COM10) dient.

10. Ladekabel (20) nach einem der vorhergehenden Ansprüche, wobei die Kommunikationseinrichtung (15) zumindest eine Kontakteinrichtung (CONT15) aufweist, die zum Durchschleifen von einem oder mehreren der folgenden Leiter ausgebildet ist: ein Außenleiter (L1, L2, L3, L+, L-), ein Neutralleiter (N), ein PP-Leiter (PP) und/oder ein CP-Leiter (CP).

11. Ladekabel (20) nach einem der vorhergehenden Ansprüche, aufweisend eine Länge von zumindest 5m, insbesondere eine Länge von zumindest 10m, 15m, 20m oder 50m.

12. Ladestecker (P20) für ein Elektrofahrzeug (80) aufweisend eine Kommunikationseinrichtung (15), die zum Bereitstellen einer Kommunikationsverbindung zwischen einem infrastrukturseitigen Kommunikationssystem (M25), insbesondere auf Ethernet-Basis, und einem fahrzeugseitigen Kommunikationssystem (M80) eines Elektrofahrzeugs (80), insbesondere auf Powerline-Basis, ausgebildet ist.

13. Ladestecker (P20) nach Anspruch 12, wobei die Kommunikationseinrichtung (15) derart im Ladestecker (P20) angeordnet ist, dass durch eine Ladespannung (UC) und/oder einen Ladestrom (IC) hervorgerufene Störungen auf die Kommunikationseinrichtung (15) minimal sind.

14. Ladestecker nach einem der Ansprüche 12 oder 13 aufweisend ein Schirmelement (SHLD), insbesondere ein mit einem Erdleiter (PE) verbundenes Schirmelement, das zur Abschirmung der Kommunikationseinrichtung (15) dient.

15. Ladesystem (100) aufweisend eine oder mehrere Ladesteuerungen (10), eine oder mehrere Energieversorgungseinrichtungen (PSU) und ein oder mehrere Ladekabel (20) gemäß einem der Ansprüche 1 bis 11.

16. Verwendung eines Ladekabels (20) gemäß einem der Ansprüche 1 bis 11 und/oder eines Ladesteckers (P20) gemäß einem der Ansprüche 12 bis 14 zum Laden und/oder Entladen eines Elektrofahrzeugs (80).
